(19) Europäisches Patentamt / European Patent Office / Office européen des brevets

(11) **EP 3 104 609 A1**

(12) **EUROPEAN PATENT APPLICATION**


(43) Date of publication:
**14.12.2016 Bulletin 2016/50**

(21) Application number: **15305865.6**

(22) Date of filing: **08.06.2015**

(51) Int Cl.:
***H04N 19/186*** *(2014.01)* ***H04N 19/30*** *(2014.01)*
***H04N 19/103*** *(2014.01)* ***H04N 19/154*** *(2014.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**



(71) Applicant: **Thomson Licensing**
**92130 Issy-les-Moulineaux (FR)**

(72) Inventors:
- **CAI, Kangying**
  **35576 Cesson-Sévigné (FR)**
- **HIRON, Franck**
  **35576 Cesson-Sévigné (FR)**
- **BORDES, Philippe**
  **35576 Cesson-Sévigné (FR)**

(74) Representative: **Huchet, Anne**
**TECHNICOLOR**
**1-5, rue Jeanne d'Arc**
**92130 Issy-les-Moulineaux (FR)**


(54) **METHOD AND APPARATUS FOR COLOR GAMUT SCALABILITY (CGS) VIDEO ENCODING WITH ARTIFACT DETECTION**


(57) In scalable video coding, Enhancement Layer (EL) pictures are usually predicted from decoded Base Layer (BL) pictures. When the EL pictures and the BL pictures are represented with different color spaces, color gamuts, transforming the decoded BL pictures, for example, to Inter-Layer Reference (ILR) pictures in the color space/gamut of the EL may improve the prediction. To accurately predict from the BL, the color space of the BL pictures can be partitioned into multiple octants, wherein each octant is associated with a respective set of color mapping function (CMF) parameters. The partitioning of color space may cause color discontinuity artifacts in the ILR pictures. In one embodiment, we avoid using a block of an ILR picture as a prediction block for the EL pictures if we determine that a color discontinuity artifact may exist in the block of the ILR picture.


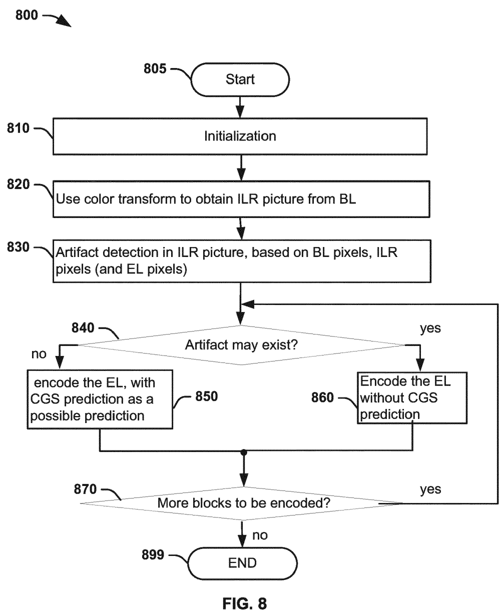


FIG. 8

EP 3 104 609 A1

Printed by Jouve, 75001 PARIS (FR)

## Description

### TECHNICAL FIELD

This invention relates to a method and an apparatus for video coding, and more particularly, to a method and an apparatus for inter-layer prediction with color mapping in scalable video encoding.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

A pixel in a picture may be transformed from one color space to another color space, or more generally, from one color to another color. For example, in scalable video coding, Enhancement Layer (EL) pictures are usually predicted from (possibly upsampled) decoded Base Layer (BL) pictures. When the EL pictures and the BL pictures are represented with different color spaces and/or have been color graded differently, or have different luminance ranges (such as Standard Dynamic Range for the BL and High Dynamic Range for the EL) transforming the decoded BL pictures, for example, to the color space, or the dynamic range, of the EL may improve the prediction.

This color transform is also known as color mapping, which may be represented by a Color Mapping Function (CMF). The CMF can for example be approximated by a 3x3 gain matrix plus an offset (Matrix-Offset model), which are defined by 12 parameters. When only one set of Matrix-Offset model parameters is used to map the entire color space of the BL pictures, such an approximation of the CMF may not be very precise because it assumes a linear transform model. To improve the precision of color mapping, the color space of the BL pictures can be partitioned into multiple octants, wherein each octant is associated with a respective color mapping function.

In another example, a 3D Look Up Table (also known as 3D LUT), which indicates how a color (usually with three color components) is mapped to another color in a look-up table, can be used to describe a CMF. The 3D LUT can be much more precise because its size can be increased depending on the required accuracy. However, a 3D LUT may thus represent a huge data set.

In another example, the color transform can be performed by applying a one-dimensional color LUT independently on each color component of a picture or of a region in the picture. Since applying 1D LUT independently on each color component breaks component correlation, which may decrease the efficiency of the inter-layer prediction and thus the coding efficiency, a linear model such as a 3x3 matrix (in the case of 3 color components) and optionally a vector of offsets can be applied to the mapped components so as to compensate for the decorrelation between the components. Optionally, an additional transform can be performed by applying another one-dimensional color LUT independently on each color component of a picture or of a region in the picture.

### SUMMARY

According to an aspect of the present principles, a method for scalable video encoding is presented, comprising: transforming a block in a BL picture to a block of an ILR (Inter-Layer Reference) picture using color mapping; estimating whether an artifact exists in the block of the ILR picture; and encoding a block in an EL picture, using at least one of Intra prediction and Inter prediction, in response to the estimating, wherein the encoding excludes the block of the ILR picture from being used as a prediction block for the EL. The present embodiments also provide an apparatus for performing these steps.

According to another aspect of the present principles, a method for scalable video encoding is presented, comprising: transforming a block in a BL picture to a block of an ILR picture using color mapping; determining a first octant, in a color space, to which a first pixel of the BL picture belongs; determining whether the first pixel of the BL picture belongs to the boundary area of the first octant in the color space; estimating whether an artifact exists in the block of the ILR picture responsive to a first set of pixels in the BL picture that are spatially adjacent to the first pixel of the BL picture and belong to a boundary area of the first octant in the color space, wherein each pixel of the first set of pixels in the BL picture belongs to an adjacent octant of the first octant in the color space; and encoding a block in an EL (Enhancement Layer) picture, using at least one of Intra prediction and Inter prediction, in response to the estimating, wherein the encoding excludes the block of the ILR picture from being used as a prediction block for the EL. The present embodiments also provide an apparatus for performing these steps.

The present embodiments also provide a computer readable storage medium having stored thereon instructions for scalable video encoding according to the methods described above.

The present embodiments also provide a computer readable storage medium having stored thereon a bitstream generated according to the methods described above.

BRIEF DESCRIPTION OF THE DRAWINGS

FIG. 1 shows the architecture of an exemplary SHVC encoder.

FIG. 2 shows an exemplary partitioning of a color space.

FIG. 3 shows a corresponding pixel in the enhancement layer for a pixel in the base layer.

FIG. 4 is a flowchart depicting an exemplary method for scalable video encoding with CGS (Color Gamut Scalability) prediction.

FIG. 5A is a pictorial example depicting a color discontinuity artifact, FIG. 5B includes arrows pointing to the location of the artifact, FIG. 5C shows the same portion of the picture without CGS, and FIG. 5D shows the same portion of the picture encoded with our proposed techniques.

FIG. 6 is a pictorial example illustrating that an EL picture may be encoded using inter prediction within the enhancement layer and inter-layer prediction.

FIG. 7A is a pictorial example illustrating that the DPB for a current EL picture may contain EL pictures and ILR (Inter-Layer Reference) pictures; FIG. 7B is a pictorial example illustrating that for a Nx2N PU (Prediction Unit), each partition may choose to use an EL picture or an ILR picture as a reference picture, and for a 2Nx2N PU, it may also choose an EL picture or an ILR picture as a reference picture; and FIG. 7C is a pictorial example illustrating that the ILR picture is not used by the prediction unit as a reference picture.

FIG. 8 is a flowchart depicting an exemplary method for reducing color discontinuity artifact in the reconstructed EL pictures, according to an embodiment of the present principles.

FIG. 9 is a pictorial example illustrating a boundary between octants A and B in the color space and a boundary area.

FIG. 10 is a flowchart depicting an exemplary method for detecting whether a color discontinuity artifact may occur at a pixel, according to an embodiment of the present principles.

FIG. 11 illustrates a block diagram depicting an exemplary system in which various aspects of the exemplary embodiments of the present principles may be implemented.

FIG. 12 illustrates a block diagram depicting an example of a video processing system that may be used with one or more implementations.

FIG. 13 illustrates a block diagram depicting another example of a video processing system that may be used with one or more implementations.

DETAILED DESCRIPTION

In scalable video coding, for example, as defined in the scalable extension of HEVC (also referred to as SHVC, as described in a document entitled "High Efficiency Video Coding, Recommendation ITU-T H.265," published by ITU-T in October 2014), video signals represented in different layers can have different parameters, such as, but not limited to, spatial resolutions, sample bit depths, and color gamuts. Depending on which parameters differ between the BL and EL, appropriate forms of inter-layer processing are applied to the BL reconstructed pictures to derive the inter-layer reference (ILR) pictures for efficient EL coding.

In the following, we use a two-layer SHVC encoder to illustrate various embodiments according to the present principles. It should be noted that the present principles can be applied to any scalable video encoders with one or more enhancement layers.

FIG. 1 shows the architecture of an exemplary SHVC encoder. The base layer video is encoded, for example,

using an HEVC or AVC encoder (110). The reconstructed BL picture is stored in the BL Decoded Picture Buffer (BL DPB, 120). When necessary, appropriate inter-layer processing is applied to the reconstructed BL picture to obtain an inter-layer reference picture, using an inter-layer processing module 130. The ILR picture is then placed in the EL Decoded Picture Buffer (EL DPB, 150) as a reference picture. The enhancement layer video is encoded, for example, using an HEVC encoder (140), based on the EL temporal reference pictures and the ILR pictures. The bitstream from the Base Layer and the Enhancement Layer, namely, the BL stream and the EL stream, can then be multiplexed into one bitstream using a multiplexer (160).

When the color spaces and/or the color gamuts of the BL and of the EL are different, one can use a color mapping process to transform the pixels of the BL to form the inter-layer prediction of the EL pixels. In the following, the color mapping is also called CGS (Color Gamut Scalability) prediction as it supports color gamut scalability. In the present application, we use the YUV color space to illustrate different embodiments. The present principles can also be applied to other color spaces, for example, but not limited to, the RGB color space and XYZ color space. The present principles can also be applied when the BL and EL use different color spaces.

As described before, to improve the precision of color mapping, the color space of the BL pictures can be partitioned into multiple octants, wherein each octant can be associated with a respective Matrix-Offset model. FIG. 2 shows an exemplary partitioning of a color space, wherein the base layer color space is partitioned into 3D regions (also referred to as octants). FIG. 2 shows that an octant according to this application may be a cube (201, 202) or a slab (203). The term octant is used in this application to refer to a portion of the 3D color space, wherein in the exemplary embodiments the octant may be a 3D space bounded by six mutually perpendicular planes. However, it is to be understood that the term may also refer to other divisions of the 3D color space into units that may be processed in the manner described below. As shown in FIG. 2, an octant may have different lengths along the Y-, U-, and V-directions, and one octant may have a different size and/or shape from another octant. Each octant can be associated with twelve parameters of the Matrix-Offset model, which enables the CGS prediction of the EL pixels from the corresponding BL pixels. FIG. 3 illustrates that when BL picture S1 and EL picture S2 have the same spatial resolution (for example, when SNR scalability is used), EL pixel p' is predicted from co-located BL pixel p, or EL pixel p' is predicted from re-sampled BL pixel p when BL picture S1 and EL picture S2 have different spatial resolutions (for example, when spatial scalability is used) or when color re-phasing filter is used.

Mathematically, the CGS prediction of EL pixel (*y'*, u', *v'*) from the corresponding BL pixel (*y,* u, *v*) using the Matrix-Offset model can be described as:

$$\begin{pmatrix} y' \\ u' \\ v' \end{pmatrix} = M_i \begin{pmatrix} y \\ u \\ v \end{pmatrix} + O_i = \begin{pmatrix} a_{0,i} & b_{0,i} & c_{0,i} \\ a_{1,i} & b_{1,i} & c_{1,i} \\ a_{2,i} & b_{2,i} & c_{2,i} \end{pmatrix} \begin{pmatrix} y \\ u \\ v \end{pmatrix} + \begin{pmatrix} o_{0,i} \\ o_{1,i} \\ o_{2,i} \end{pmatrix} \qquad (1)$$

where $M_i = \begin{pmatrix} a_{0,i} & b_{0,i} & c_{0,i} \\ a_{1,i} & b_{1,i} & c_{1,i} \\ a_{2,i} & b_{2,i} & c_{2,i} \end{pmatrix}$ is the gain matrix and $O_i = \begin{pmatrix} o_{0,i} \\ o_{1,i} \\ o_{2,i} \end{pmatrix}$ is the offset vector for octant *i*.

FIG. 4 illustrates an exemplary method 400 for scalable video encoding with CGS prediction. Method 400 starts at step 405. At step 410, an encoder accesses a video, which is then separated into a base layer input video and an enhancement layer video, as input, or the encoder accesses a base layer input video and an enhancement layer video as input. At step 420, the encoder begins to loop over individual pictures in the input video. At step 430, the encoder encodes the base layer for the current picture (picture n), for example, using an AVC or HEVC video encoder. The encoder may partition the BL color space into multiple octants, for example, using a pre-determined pattern. The encoder can also vary the partitioning from picture to picture.

At step 440, the encoder begins to loop over individual octants in the current picture. At step 450, the encoder computes the CMF parameters, for example, twelve parameters of a Matrix-Offset model, for the current octant ($Oct_i$). The loop over individual octants ends at step 460. At step 470, the encoder performs CGS prediction to obtain the EL prediction from the BL pixel based on the CMF parameters. The CGS prediction may be performed, for example, on a block basis or on a picture basis. When it is performed on a block basis, for each pixel in a block, the encoder determines an octant to which the pixel belongs. Subsequently, using the CMF parameters for the octant, the encoder can transform the pixel into the EL prediction using the CMF. The encoder may also perform other operations, for example, but not limited to, spatial upsampling, bit depth upsampling to obtain the EL prediction. Based on the CGS prediction and/or other types of inter-layer prediction, the encoder encodes the enhancement layer for the current picture at step 480. The loop over individual pictures ends at step 490. Method 400 ends at step 499.

For the decoder to properly decode the bitstream, the CMF parameters are also encoded into the bitstream. For example, the CMF parameters can be encoded using syntax structures colour_mapping_table () and colour_mapping_octants (), in PPS (Picture Parameter Set), as described in Sections F.7.3.2.3.4 and F.7.3.2.3.5 of the SHVC Specification.

In the current implementation of the SHVC reference software, the CMF parameters are estimated using an error minimization method (such as Least Square Minimization, LSM):

$$\arg\min_{(M_i,O_i)} Err_X(M_i,O_i) \qquad (2)$$

where $Err_X(M_i,O_i) = \sum_{(y,u,v)\in oct_i}(X - M_i.(y,u,v)^T - O_i)^2$, X corresponds to the set of pixels in the EL to be predicted, ($M_i$, $O_i$) are the matrix and offset as described in Eq. (1), and $Oct_i$ is the current octant under consideration. That is, only pixels from the current $Oct_i$ (BL) itself and corresponding pixels in the EL are used to derive the CMF parameters for $Oct_i$. After the CMF parameters $M_i$ and $O_i$ are estimated, the CGS prediction corresponding to the current octant can be obtained as described in Eq. (1).

The computation of the minimization problem (2) is performed separately for each octant, using the pixels ($y,u,v$) belonging to the current octant (i.e., $(y,u,v) \in Oct_i$). Because different octants use different sets of pixels to estimate the CMF parameters, two pixels that are close in the BL color space, but belong to two different octants, may be transformed into two pixels that show color discontinuity in the EL prediction frame.

For example, a BL picture includes a red area with smooth gradients. After the partitioning of the color space, the colors corresponding to a first subset of the red area belong to one octant, and the colors corresponding to the rest of the red area belong to other octants. After color mapping (CGS prediction for EL), the color range corresponding to the first subset becomes more saturated than the color corresponding to the rest of the red color set. This generates artificial edge (artifact) in the area that was originally smooth in EL.

FIG. 5A shows an exemplary artifact with color discontinuity, and we use arrows to point to the artificial edge in FIG. 5B. In this example, the pixels within the area pointed to by the arrows belong to one octant and other pixels belong to other octants in the color space. As can be seen from FIG. 5A, an octant in the color space may correspond to an irregular area in the picture. More generally, an octant in the color space may correspond to any shape of area of pixels in the picture. After color mapping, the colors in the EL prediction are not as close as they should be in the EL picture, and sometimes cause color discontinuity artifacts, which are not present without CGS as shown in FIG. 5C. At a low bit rate, the residuals are often coarsely quantized and may not compensate the artifacts in the EL prediction entirely. Thus, the reconstructed EL picture may exhibit similar artifact as in the EL prediction.

The present principles are directed to a method and an apparatus for reducing artifacts caused by the color space partitioning when performing color transform. In one embodiment, we choose not to use CGS prediction if we detect that the color discontinuity artifact is likely to occur in the ILR picture because of the color space partitioning. Advantageously, the color discontinuity artifact in the ILR picture does not propagate into the encoded EL picture and the artifact is reduced in the reconstructed EL picture. Thus, the proposed techniques may improve the subjective quality of the reconstructed enhancement layer video.

FIG. 6 illustrates an example where an EL picture (650, $Cur_{EL}$) may be encoded using inter prediction within the enhancement layer from pictures EL1 (610), EL2 (620), EL3 (630) and EL4 (640). Further, the BL reconstructed picture (655) corresponding to EL picture $Cur_{EL}$ may be color transformed to form an ILR picture (660, $P_{ILR}$) when CGS is used. Consequently, as shown in FIG. 7A, the DPB for the current EL picture may contain pictures EL1, EL2, EL3, EL4 and $P_{ILR}$. Specifically, as shown in FIG. 7B, for a Nx2N PU (Prediction Unit), each partition may choose to use an EL picture ELi (i = 1, 2, 3, 4) or an ILR picture $P_{ILR}$ as a reference picture. For a 2Nx2N PU, it may also choose to use an EL picture ELi (i = 1, 2, 3, 4) or an ILR picture $P_{ILR}$ as a reference picture, or coding with Intra prediction. In the examples of FIG. 7B, we use a co-located block (i.e., mv=0) in the ILR picture as a prediction block for the EL. More generally, other blocks in the ILR picture can also be used as the prediction blocks for the EL.

As discussed above, when the ILR picture contains color discontinuity artifacts, at a low bit rate, the artifacts may not be compensated by the residuals, and thus the reconstructed EL picture may also appear to have color discontinuity artifacts. To reduce the artifacts in the reconstructed EL picture, we choose not to use the ILR picture as a reference picture for a block (i.e., not to use CGS prediction) if we determine that the color discontinuity artifact is likely to exist in a corresponding block of the ILR picture. That is, a block in the EL with a detected color discontinuity artifact in a corresponding ILR block may be coded using an Intra mode, or using EL pictures EL1, EL2, EL3 and EL4 as reference pictures, but not with the ILR picture $P_{ILR}$ as a reference picture. Thus, the block may only choose from EL pictures EL1, EL2, EL3 and EL4 for a reference picture as shown in FIG. 7C. It should be noted that a block may correspond to a macroblock or a partition in H.264/AVC, or a CU (Coding Unit) or PU in H.265/HEVC. More generally,

a block may be a block of pixels at any size.

FIG. 8 illustrates an exemplary method 800 for reducing color discontinuity artifacts in the reconstructed EL pictures according to the present principles. Method 800 starts at step 805. At initialization step 810, the encoder may set different encoding parameters. At step 820, the encoder applies color transform and generates the ILR picture for a reconstructed BL picture. Then at step 830, the encoder estimates whether color discontinuity artifacts may exist in the ILR picture, using information from the BL picture, the ILR picture and/or the EL picture. At step 840, the encoder checks whether the artifact is estimated to exist. If the artifact is estimated to exist in a corresponding ILR block, the encoder encodes the EL picture without using CGS prediction (i.e., without using the ILR picture as a reference) at step 860. Otherwise, if the artifact is not estimated to exist, the encoder encodes the EL picture considering the CGS prediction. At step 870, the encoder checks whether more blocks are to be encoded. If yes, the control returns to step 840. Otherwise, method 800 ends at step 899.

Alternatively, at step 860, the encoder may set a value that prevents the encoder from choosing the ILR picture as a reference for the current block. For example, when the encoder computes an error between an EL block and its prediction from the ILR picture, for example, using Sum of Absolute Difference (SAD) or L2 norm, the encoder may replace the ILR pixels by values that largely exceed the color range (for example, set the value to (10000,10000,10000) for 8-bit pixels) that will dramatically increase the SAD and prevent the encoder from using the ILR picture for prediction.

In the following, we describe the step of artifact detection 830 in further detail.

Artifact Detection (830)

For ease of notations, we define an area adjacent to the boundary of two octants in the color space as a boundary area. For example, in FIG. 9, using a 2-D representation, we illustrate that the shaded area (910) adjacent to the boundary (920) of octants A and B in the color space is considered as a boundary area. We also denote a corresponding pixel in the ILR, obtained by color transforming pixel $S_i$ in the base layer, as pixel $P_i$.

For each pixel $S_i$ in the base layer, we denote its location as $X_i$ and its color values as $Ci = (y_i, u_i, v_i)$. The distance between pixels $S_i$ and $S_j$ (i.e., the distance between locations $X_i$ and $X_j$, denoted as $Dis_{ij}(S_i, S_j)$) can be used to determine spatially neighboring pixels, for example, pixel $S_j$ is considered to be a spatially neighboring pixel of $Si$ if $Dis_{ij}(S_i, S_j) \leq a_{ImgDis}$, where $a_{ImgDis}$ is a threshold. In one example, threshold $a_{ImgDis}$ can be set to 1.

FIG. 10 illustrates an exemplary method 1000 for detecting whether a color discontinuity artifact may exist at a pixel in an ILR picture according to the present principles. Method 1000 starts at step 1005. At the initialization step 1010, the encoder may set different parameters, for example, the encoder may set different thresholds and mark all pixels $\{P_i\}$ as "no artifact". At step 1020, the encoders starts to loop over individual pixels in a BL picture. At step 1030, the encoder sets the counter $n(P_i)$ to zero and determines an octant ($Oct_K$) to which the current pixel $S_i$ belongs. At step 1035, the encoder checks whether pixel $S_i$ belongs to the boundary area of $Oct_K$. If pixel $S_i$ does not belong to the boundary area of $Oct_K$, we consider that color discontinuity artifact does not exist at pixel $P_i$ and method 1000 ends at step 1099.

Otherwise, if pixel $S_i$ belongs to the boundary area of $Oct_K$, at step 1040, the encoder starts to loop over spatially neighboring pixels of $S_i$. For example, we may consider N spatially neighboring pixels $S_j$ that satisfy $Dis_{ij}(S_i, S_j) \leq a_{ImgDis}$. At step 1050, the encoder determines an octant ($Oct_L$) to which the current spatially neighboring pixel $S_j$ belongs. At step 1055, the encoder determines whether pixels $S_i$ and $S_j$ belong to different octants, whether octants $Oct_K$ and $Oct_L$ share a boundary, and whether $S_i$ and $S_j$ belong to the boundary area. If the conditions are satisfied, the encoder computes a discontinuity error in the ILR picture, for example as $|P_i - P_j|$. The discontinuity error may be computed for each color component c (e.g., c = Y, U or V). According to a variant, the discontinuity error is computed as the local contrast ratio between the ILR and BL as $|P_i - P_j|/|S_i - S_j+1|$ of a given component c (e.g., c = Y, U or V). According to another variant, the error is derived as a weighted linear combination of the errors for several color components.

At step 1070, the encoder increments the counter $n(P_i)$ if the discontinuity error $E_{ij}$ exceeds a threshold. At step 1080, the encoder checks whether there are more spatially neighboring pixels for the current pixel $S_i$. If yes, the control returns to step 1050. Otherwise, at step 1090, the encoder determines that a color discontinuity artifact may exist at pixel $P_i$ if $n(P_i)$ exceeds a threshold and marks pixel $P_i$ as "artifact." At step 1095, the encoder checks whether there are more pixels to be checked in the BL picture. If yes, the control returns to step 1030. Otherwise, method 1000 ends at step 1099.

Table 1 provides exemplary pseudo-code for one exemplary implementation, where $n_c$ is the number of color components and typically $n_c = 3$, *th_cdiff* is a threshold that may be used at step 1070, and *th_neighbors* is a threshold that may be used at step 1090.

Table 1

```
foreach pixel S_i in the picture BL
{
  n(P_i) = 0
  Determine the octant Oct_K in color space that S_i falls into
  if (S_i falls into the boundary area of Oct_K)
  {
    foreach spatially neighboring pixel S_j (Dis_ij(S_i,S_j) ≤ a_ImgDis)
    {
      Determine the octant Oct_L in color space S_j falls into
      if (Oct_K ≠ Oct_L, Oct_K and Oct_L share boundary face/edge/points,
        and S_j falls into the boundary area of Oct_K)
      {
        cond = false
        foreach c=0…n_c
        {
          if ( abs(Pi(c) - Pj(c)) > th_cdiff(c) )
            cond = true
        }

        if ( cond )
          n(P_i)++
      }
    }
  }
  if (n(P_i)> th_neighbors)
    mark P_i as "artifact"
}
```

In Table 1, we check for each color component whether the difference between $P_i$ and $P_j$ exceeds a threshold, and the counter n($P_i$) increments by one if the difference between $P_i$ and $P_j$ exceeds a threshold for any color component. Alternatively, we may adjust the counter n($P_i$) based on the comparison results for two or more color components. For example, we may only increment n($P_i$) when the difference between $P_i$ and $P_j$ for two color components U and V both exceed the respective thresholds (i.e., "if (abs(Pi(c)-Pj(c)) > th_cdiff(c) )" can be replace by "if ((abs(Pi(U) - Pj(U)) > th_cdiff(U)) && (abs(Pi(V) - Pj(V)) > th_cdiff(V)))").

In a variation, we also check whether a pixel has a perceptual significance, for example, whether a pixel has a more saturated color or belongs to a region of interest. We consider that artifact is more pronounced in the perceptually important area and only mark a pixel within such an area as an "artifact."

Table 2

```
foreach pixel S_i in the picture BL and T_i in the original EL
{
  n(P_i) = 0
  Determine the octant Oct_K in color space that S_i falls into
  if (S_i falls into the boundary area of Oct_K)
  {
    foreach spatially neighboring pixel S_j (Dis_ij(S_i,S_j) ≤ a_ImgDis)
      and Ti in the original EL
    {
      Determine the octant Oct_L in color space S_j falls into
      if (Oct_K ≠ Oct_L, Oct_K and Oct_L share boundary face/edge/
        points,and S_j falls into the boundary area of Oct_K)
      {
        cond = false
        foreach c=0…n_c
        {
          if ( abs(Pi(c)- Ti(c) - Pj(c)+ Tj(c)) > th_cdiff(c) )
            cond = true
        }
        if ( cond )
          n(P_i)++
      }
    }
  }
  if (n(P_i)> th_neighbors )
    mark P_i as "artifact"
}
```

In another variation, we may also consider the EL pixels as illustrated in Table 2 (the changes with respect to Table 1 are underlined). In particular, we further consider the differences between the ILR pixel and the original EL pixel for *i* ($T_i$) and *j*($T_j$) respectively ($P_i$ - $T_i$, $P_j$ - $T_j$). If the difference varies significantly from pixel *i* to pixel *j,* we consider that the color discontinuity artifact is more likely to exist and increment the counter n($P_i$). The difference between ($P_i$ - $T_i$) and ($P_j$ - $T_j$) can also be seen as a difference between ($P_i$ - $P_j$) and ($T_i$ - $T_j$). When the difference between ($P_i$ - $P_j$) and ($T_i$ - $T_j$) becomes large, it indicates the variation in the ILR picture is quite different from the variation in the EL picture and there may be an artifact.

In the above, we describe different embodiments in detecting whether an artifact may exist at a pixel in the ILR picture. After the artifact is detected for individual pixels, we can determine whether a block may contain an artifact. In one example, we consider that a block contains an artifact if an artifact is estimated to exist at any pixel within the block. We can also use other pooling methods to detect an artifact for a block based on the artifact detection results for individual pixels of the block.

In the above, we discussed various embodiments using the Matrix-Offset model. The present principles can also be applied when other models are used for color mapping.

FIG. 5D shows the same portion of picture as FIG. 5A, encoded with the proposed techniques. As shown in FIG. 5D, the color discontinuity artifacts no longer exist.

FIG. 11 illustrates a block diagram of an exemplary system in which various aspects of the exemplary embodiments of the present principles may be implemented. System 1100 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 1100 may be communicatively coupled to other similar systems, and to a display via a communication channel as shown in FIG. 11 and as known by those skilled in the art to implement the exemplary video system described above.

The system 1100 may include at least one processor 1110 configured to execute instructions loaded therein

for implementing the various processes as discussed above. Processor 1110 may include embedded memory, input output interface and various other circuitries as known in the art. The system 1100 may also include at least one memory 1120 (e.g., a volatile memory device, a non-volatile memory device). System 1100 may additionally include a storage device 1140, which may include non-volatile memory, including, but not limited to, EEPROM, ROM, PROM, RAM, DRAM, SRAM, flash, magnetic disk drive, and/or optical disk drive. The storage device 1140 may comprise an internal storage device, an attached storage device and/or a network accessible storage device, as non-limiting examples. System 1100 may also include an encoder/decoder module 1130 configured to process data to provide an encoded video or decoded video.

Encoder/decoder module 1130 represents the module(s) that may be included in a device to perform the encoding and/or decoding functions. As is known, a device may include one or both of the encoding and decoding modules. Additionally, encoder/decoder module 1130 may be implemented as a separate element of system 1100 or may be incorporated within processors 1110 as a combination of hardware and software as known to those skilled in the art.

Program code to be loaded onto processors 1110 to perform the various processes described hereinabove may be stored in storage device 1140 and subsequently loaded onto memory 1120 for execution by processors 1110. In accordance with the exemplary embodiments of the present principles, one or more of the processor(s) 1110, memory 1120, storage device 1140 and encoder/decoder module 1130 may store one or more of the various items during the performance of the processes discussed herein above, including, but not limited to the base layer input video, the enhancement layer input video, equations, formula, matrices, variables, operations, and operational logic.

The system 1100 may also include communication interface 1150 that enables communication with other devices via communication channel 1160. The communication interface 1150 may include, but is not limited to a transceiver configured to transmit and receive data from communication channel 1160. The communication interface may include, but is not limited to, a modem or network card and the communication channel may be implemented within a wired and/or wireless medium. The various components of system 1100 may be connected or communicatively coupled together using various suitable connections, including, but not limited to internal buses, wires, and printed circuit boards.

The exemplary embodiments according to the present principles may be carried out by computer software implemented by the processor 1110 or by hardware, or by a combination of hardware and software. As a non-limiting example, the exemplary embodiments according to the present principles may be implemented by one or more integrated circuits. The memory 1120 may be of any type appropriate to the technical environment and may be implemented using any appropriate data storage technology, such as optical memory devices, magnetic memory devices, semiconductor-based memory devices, fixed memory and removable memory, as non-limiting examples. The processor 1110 may be of any type appropriate to the technical environment, and may encompass one or more of microprocessors, general purpose computers, special purpose computers and processors based on a multi-core architecture, as non-limiting examples.

Referring to FIG. 12, a data transmission system 1200 is shown, to which the features and principles described above may be applied. The data transmission system 1200 may be, for example, a head-end or transmission system for transmitting a signal using any of a variety of media, such as, satellite, cable, telephone-line, or terrestrial broadcast. The data transmission system 1200 also may be used to provide a signal for storage. The transmission may be provided over the Internet or some other network. The data transmission system 1200 is capable of generating and delivering, for example, video content and other content.

The data transmission system 1200 receives processed data and other information from a processor 1201. In one implementation, the processor 1201 generates color mapping function parameters. The processor 1201 may also provide metadata to 1200 indicating, for example, the partitioning of the color space.

The data transmission system or apparatus 1200 includes an encoder 1202 and a transmitter 1204 capable of transmitting the encoded signal. The encoder 1202 receives data information from the processor 1201. The encoder 1202 generates an encoded signal(s).

The encoder 1202 may include sub-modules, including for example an assembly unit for receiving and assembling various pieces of information into a structured format for storage or transmission. The various pieces of information may include, for example, coded or uncoded video, and coded or uncoded elements. In some implementations, the encoder 1202 includes the processor 1201 and therefore performs the operations of the processor 1201.

The transmitter 1204 receives the encoded signal(s) from the encoder 1202 and transmits the encoded signal(s) in one or more output signals. The transmitter 1204 may be, for example, adapted to transmit a program signal having one or more bitstreams representing encoded pictures and/or information related thereto. Typical transmitters perform functions such as, for example, one or more of providing error-correction coding, interleaving the data in the signal, randomizing the energy in the signal, and modulating the signal onto one or more carriers using a modulator 1206. The transmitter 1204 may include, or interface with, an antenna (not shown). Further, implementations of the transmitter 1204 may be limited to the modulator 1206.

The data transmission system 1200 is also communicatively coupled to a storage unit 1208. In one implementation, the storage unit 1208 is coupled to the encoder 1202, and stores an encoded bitstream from the encoder 1202. In another implementation, the storage unit 1208 is coupled to the transmitter 1204, and stores a bitstream from the transmitter 1204. The bitstream from the transmitter 1204 may include, for example, one or more encoded bitstreams that have been further processed by the transmitter 1204. The storage unit 1208 is, in different implementations, one or more of a standard DVD, a Blu-Ray disc, a hard drive, or some other storage device.

Referring to FIG. 13, a data receiving system 1300 is shown to which the features and principles described above may be applied. The data receiving system 1300 may be configured to receive signals over a variety of media, such as storage device, satellite, cable, telephone-line, or terrestrial broadcast. The signals may be received over the Internet or some other network.

The data receiving system 1300 may be, for example, a cell-phone, a computer, a set-top box, a television, or other device that receives encoded video and provides, for example, decoded video signal for display (display to a user, for example), for processing, or for storage. Thus, the data receiving system 1300 may provide its output to, for example, a screen of a television, a computer monitor, a computer (for storage, processing, or display), or some other storage, processing, or display device.

The data receiving system 1300 is capable of receiving and processing data information. The data receiving system or apparatus 1300 includes a receiver 1302 for receiving an encoded signal, such as, for example, the signals described in the implementations of this application. The receiver 1302 may receive, for example, a signal providing a bitstream, or a signal output from the data transmission system 1200 of FIG. 12.

The receiver 1302 may be, for example, adapted to receive a program signal having a plurality of bitstreams representing encoded pictures. Typical receivers perform functions such as, for example, one or more of receiving a modulated and encoded data signal, demodulating the data signal from one or more carriers using a demodulator 1304, de-randomizing the energy in the signal, de-interleaving the data in the signal, and error-correction decoding the signal. The receiver 1302 may include, or interface with, an antenna (not shown). Implementations of the receiver 1302 may be limited to the demodulator 1304.

The data receiving system 1300 includes a decoder 1306. The receiver 1302 provides a received signal to the decoder 1306. The signal provided to the decoder 1306 by the receiver 1302 may include one or more encoded bitstreams. The decoder 1306 outputs a decoded signal, such as, for example, decoded video signals including video information.

The data receiving system or apparatus 1300 is also communicatively coupled to a storage unit 1307. In one implementation, the storage unit 1307 is coupled to the receiver 1302, and the receiver 1302 accesses a bitstream from the storage unit 1307. In another implementation, the storage unit 1307 is coupled to the decoder 1306, and the decoder 1306 accesses a bitstream from the storage unit 1307. The bitstream accessed from the storage unit 1307 includes, in different implementations, one or more encoded bitstreams. The storage unit 1307 is, in different implementations, one or more of a standard DVD, a Blu-Ray disc, a hard drive, or some other storage device.

The output data from the decoder 1306 is provided, in one implementation, to a processor 1308. The processor 1308 is, in one implementation, a processor configured for performing post-processing. In some implementations, the decoder 1306 includes the processor 1308 and therefore performs the operations of the processor 1308. In other implementations, the processor 1308 is part of a downstream device such as, for example, a set-top box or a television.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information,

copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

**1.** A method for scalable video encoding, comprising:

transforming (820) a block in a BL (Base Layer) picture to a block of an ILR (Inter-Layer Reference) picture using color mapping;
estimating (830) whether an artifact exists in the block of the ILR picture; and
encoding (860) a block in an EL (Enhancement Layer) picture, using at least one of Intra prediction and Inter prediction, in response to the estimating, wherein the encoding excludes the block of the ILR picture from being used as a prediction block for the EL.

**2.** The method of claim 1, wherein the estimating whether an artifact exists in the block of the ILR picture includes estimating whether an artifact exists at a first pixel of the block of the ILR picture, the first pixel of the ILR picture corresponding to a first pixel of the BL picture, further comprising:

determining (1030) a first octant, in a color space, to which the first pixel of the BL picture belongs, wherein the artifact is determined for the first pixel of the ILR picture responsive to a first set of pixels in the BL picture that are spatially adjacent to the first pixel of the BL picture and belong to a boundary area of the first octant in the color space.

**3.** The method of claim 2, further comprising:

determining (1035) whether the first pixel of the BL picture belongs to the boundary area of the first octant in the color space.

**4.** The method of claim 2, wherein each pixel of the first set of pixels in the BL picture belongs to an adjacent octant of the first octant in the color space.

**5.** The method of claim 2, further comprising:

accessing a first set of pixels of the ILR picture corresponding to the first set of pixels of the BL picture; and
determining (1060) a respective difference between the first pixel of the ILR picture and each pixel of the first set of pixels of the ILR picture,
wherein the estimating whether an artifact exists at the first pixel of the ILR picture is further responsive to the respective differences between the first pixel of the ILR picture and each pixel of the first set of pixels of the ILR picture.

**6.** The method of claim 5, wherein the respective difference is determined on a color component basis.

**7.** The method of claim 5, further comprising:

accessing a first pixel of the EL picture corresponding to the first pixel of the BL picture;
accessing a first set of pixels of the EL picture corresponding to the first set of pixels of the BL picture; and
determining a respective difference between the first pixel of the EL picture and each pixel of the first set of pixels of the EL picture,
wherein the estimating whether an artifact exists at the first pixel of the ILR picture is further responsive to the respective differences between the first pixel of the EL picture and each pixel of the first set of pixels of the EL picture.

**8.** An apparatus for scalable video encoding, comprising:

a communication interface (1150) configured to access at least one of a BL (Base Layer) picture and an EL (Enhancement Layer) picture; and
a processor (1110) configured to:

transform a block in the BL picture to a block of an ILR (Inter-Layer Reference) picture using color mapping,
estimate whether an artifact exists in the block of the ILR picture, and
encode a block in the EL picture using at least one of Intra prediction and Inter prediction, wherein the processor is configured to exclude the block of the ILR picture from being used as a prediction block for the EL if an artifact is estimated to exist for the block of the ILR picture.

**9.** The apparatus of claim 8, wherein the processor is configured to estimate whether an artifact exists at a first pixel of the block of the ILR picture in order to estimate whether an artifact exists in the block of the ILR picture, the first pixel of the ILR picture corresponding to a first pixel of the BL picture, and wherein the processor is further configured to:

determine a first octant, in a color space, to which the first pixel of the BL picture belongs, wherein the artifact is determined for the first pixel of the ILR picture responsive to a first set of pixels in the BL picture that are spatially adjacent to the first pixel of the BL picture and belong to a boundary area of the first octant in the color space.

**10.** The apparatus of claim 9, wherein the processor is configured to determine whether the first pixel of the BL picture belongs to the boundary area of the first octant in the color space.

**11.** The apparatus of claim 9, wherein each pixel of the first set of pixels in the BL picture belongs to an adjacent octant of the first octant in the color space.

**12.** The apparatus of claim 9, wherein the processor is configured to:

access a first set of pixels of the ILR picture corresponding to the first set of pixels of the BL picture; and
determine a respective difference between the first pixel of the ILR picture and each pixel of the first set of pixels of the ILR picture,
wherein the processor is configured to estimate whether an artifact exists at the first pixel of the ILR picture responsive to the respective differences between the first pixel of the ILR picture and each pixel of the first set of pixels of the ILR picture.

**13.** The apparatus of claim 12, wherein the respective difference is determined on a color component basis.

**14.** The apparatus of claim 12, wherein the processor is further configured to:

access a first pixel of the EL picture corresponding to the first pixel of the BL picture;
access a first set of pixels of the EL picture corresponding to the first set of pixels of the BL picture; and
determine a respective difference between the first pixel of the EL picture and each pixel of the first set of pixels of the EL picture,
wherein the processor is further configured to estimate whether an artifact exists at the first pixel of the ILR picture responsive to the respective differences between the first pixel of the EL picture and each pixel of the first set of pixels of the EL picture.

**15.** A non-transitory computer readable storage medium having stored thereon a bitstream generated according to any

of claims 1-7.

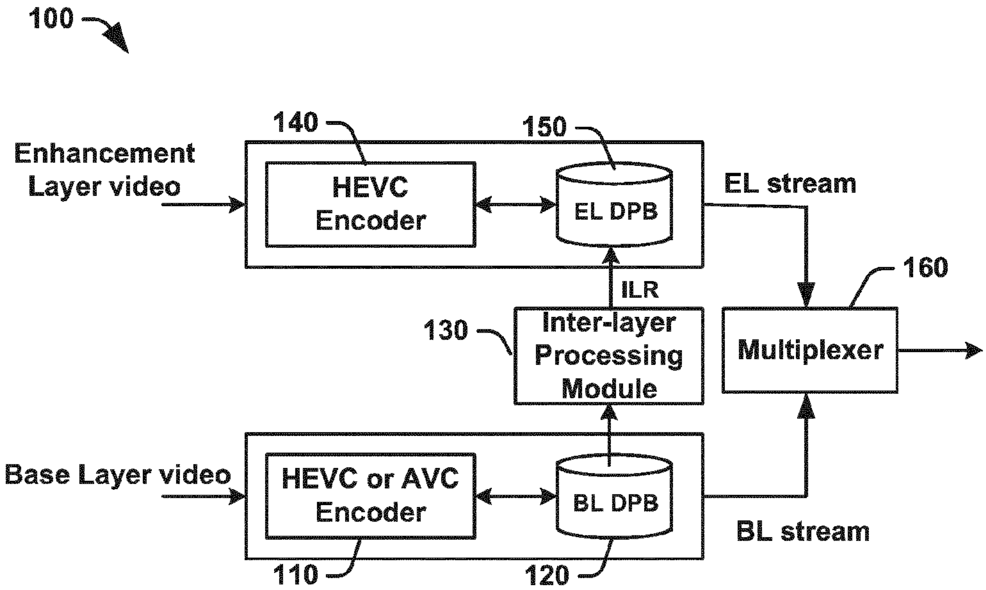
100
140
150
Enhancement Layer video
HEVC Encoder
EL DPB
EL stream
160
ILR
130
Inter-layer Processing Module
Multiplexer
Base Layer video
HEVC or AVC Encoder
BL DPB
BL stream
110
120

FIG. 1

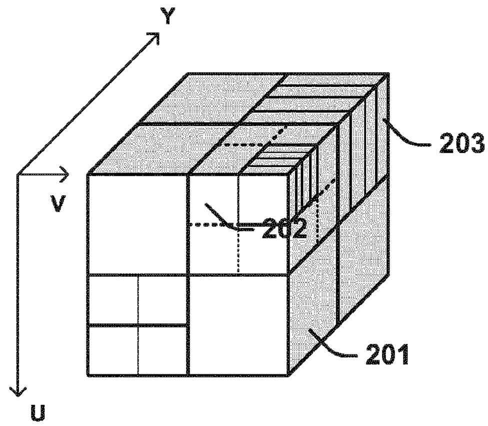
Y
V
U
203
202
201

FIG. 2

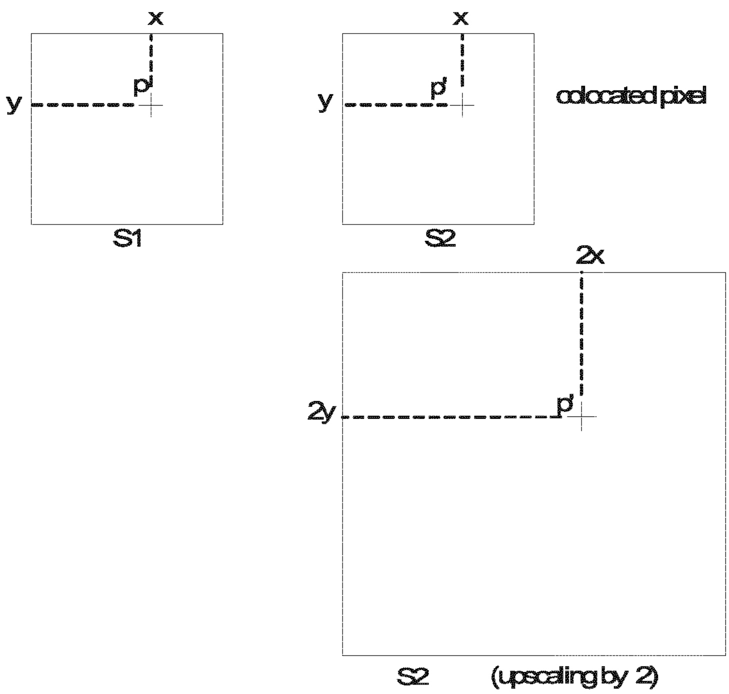


FIG. 3

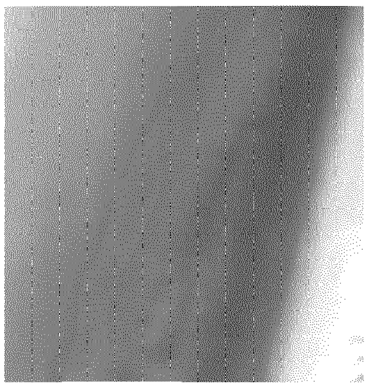

FIG. 5A

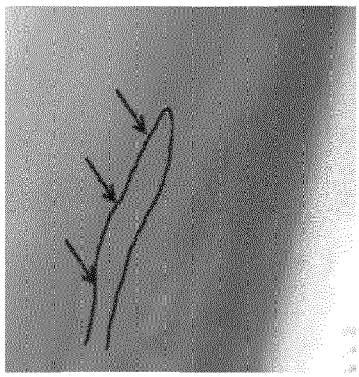

FIG. 5B

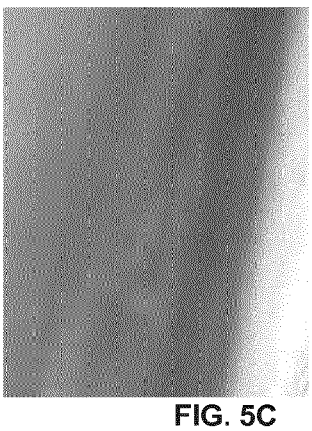

FIG. 5C

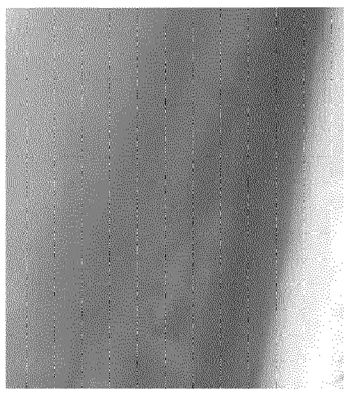

FIG. 5D

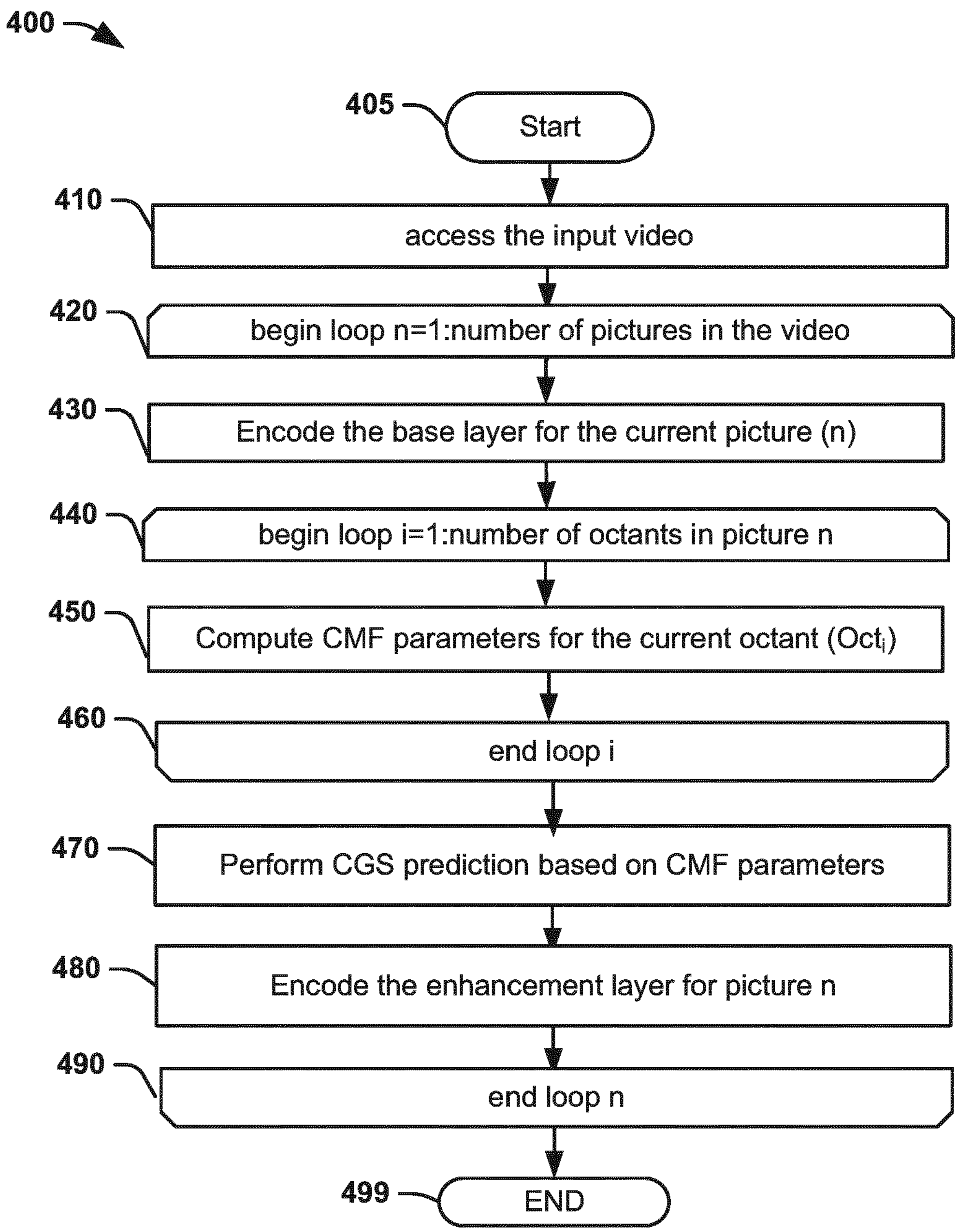
400
405
Start
410
access the input video
420
begin loop n=1:number of pictures in the video
430
Encode the base layer for the current picture (n)
440
begin loop i=1:number of octants in picture n
450
Compute CMF parameters for the current octant ($Oct_i$)
460
end loop i
470
Perform CGS prediction based on CMF parameters
480
Encode the enhancement layer for picture n
490
end loop n
499
END

FIG. 4

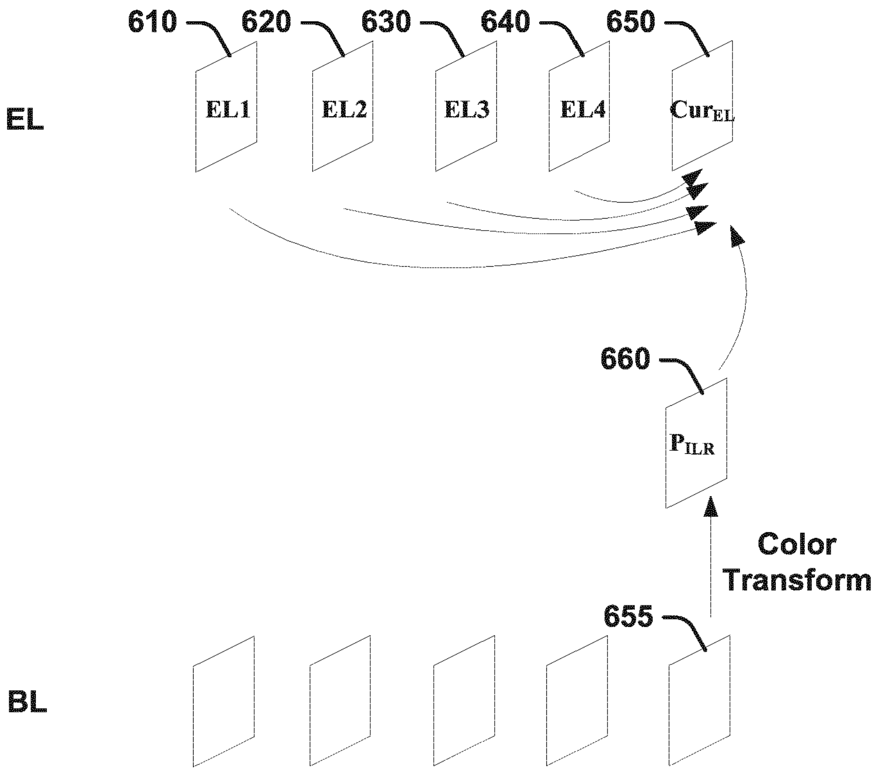
610
620
630
640
650
EL
EL1
EL2
EL3
EL4
Cur_EL
660
P_ILR
Color Transform
655
BL

FIG. 6

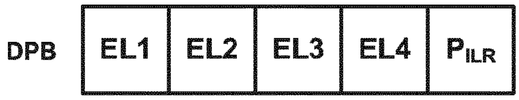


FIG. 7A

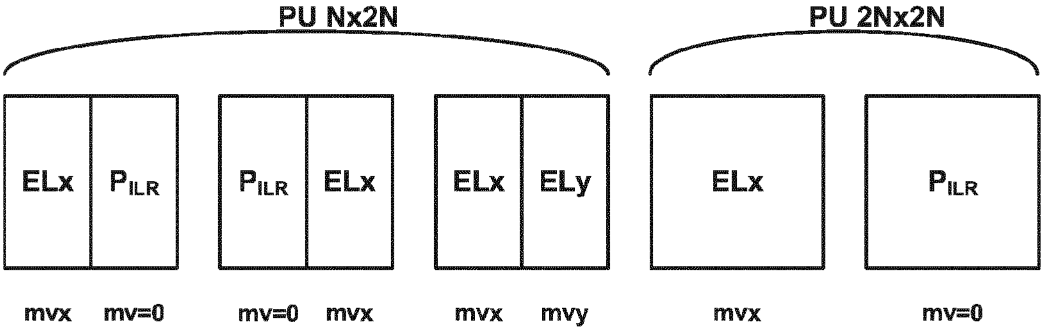


FIG. 7B

x,y = {1,2,3,4}

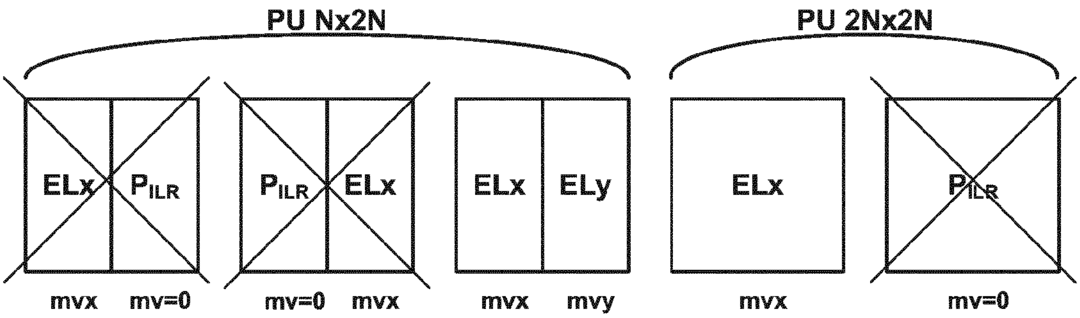


x,y = {1,2,3,4}

FIG. 7C

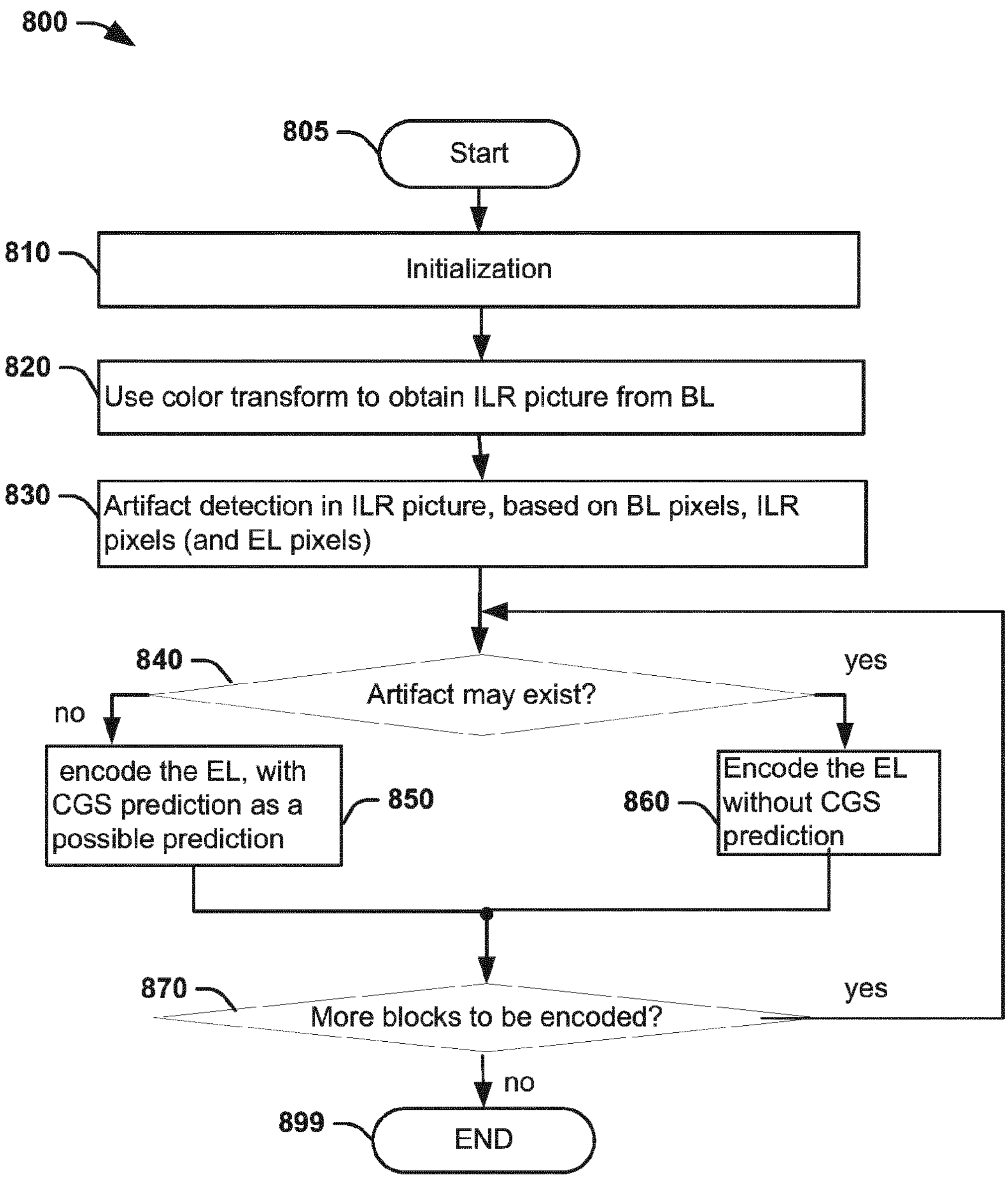
800
805
Start
810
Initialization
820
Use color transform to obtain ILR picture from BL
830
Artifact detection in ILR picture, based on BL pixels, ILR pixels (and EL pixels)
840
Artifact may exist?
no
yes
encode the EL, with CGS prediction as a possible prediction
850
860
Encode the EL without CGS prediction
870
More blocks to be encoded?
yes
no
899
END

FIG. 8

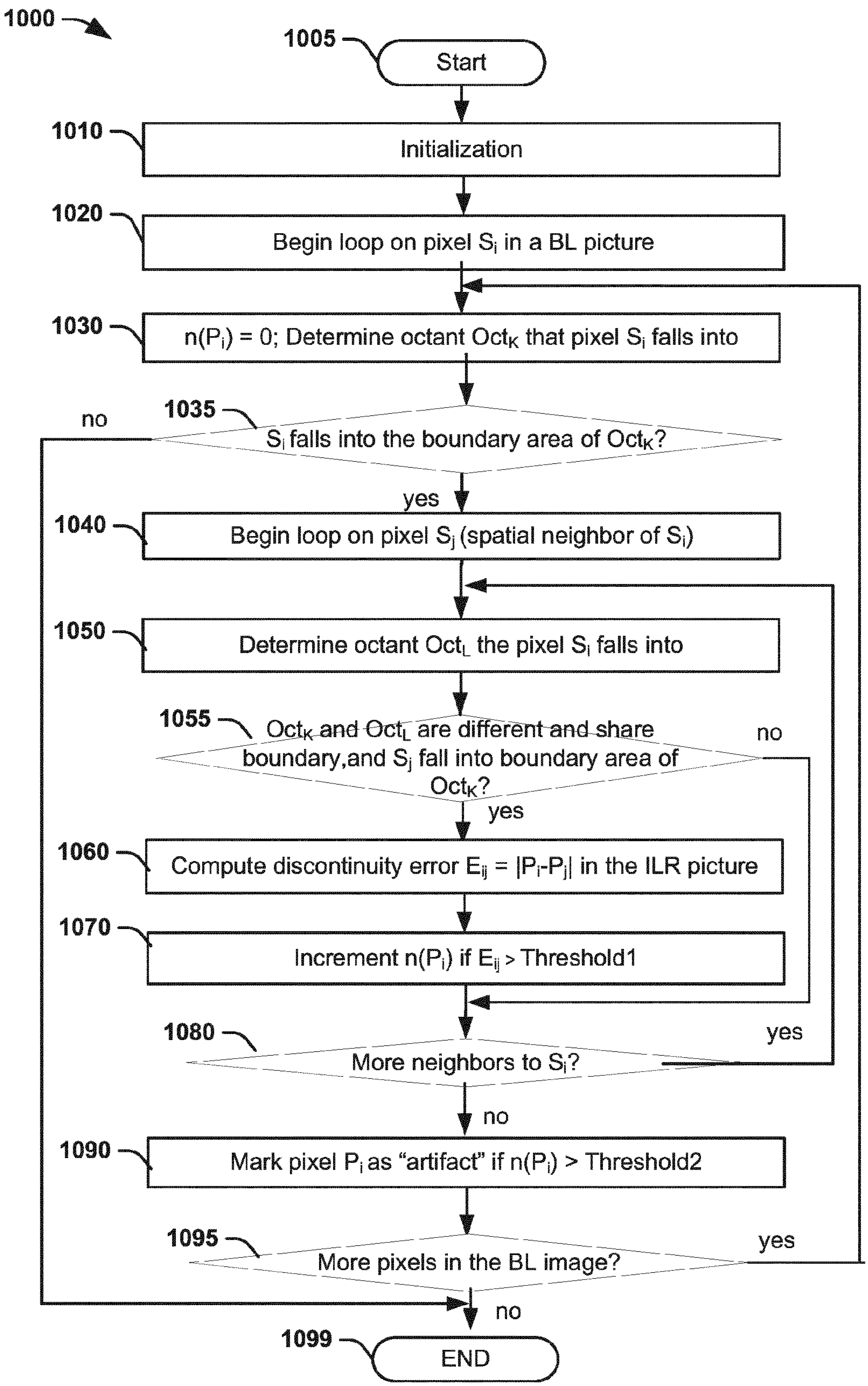
1000
1005
Start
1010
Initialization
1020
Begin loop on pixel $S_i$ in a BL picture
1030
$n(P_i) = 0$; Determine octant $Oct_K$ that pixel $S_i$ falls into
1035
$S_i$ falls into the boundary area of $Oct_K$?
no
yes
1040
Begin loop on pixel $S_j$ (spatial neighbor of $S_i$)
1050
Determine octant $Oct_L$ the pixel $S_i$ falls into
1055
$Oct_K$ and $Oct_L$ are different and share boundary,and $S_j$ fall into boundary area of $Oct_K$?
no
yes
1060
Compute discontinuity error $E_{ij} = |P_i-P_j|$ in the ILR picture
1070
Increment $n(P_i)$ if $E_{ij}$ > Threshold1
1080
More neighbors to $S_i$?
yes
no
1090
Mark pixel $P_i$ as "artifact" if $n(P_i)$ > Threshold2
1095
More pixels in the BL image?
yes
no
1099
END

FIG. 10

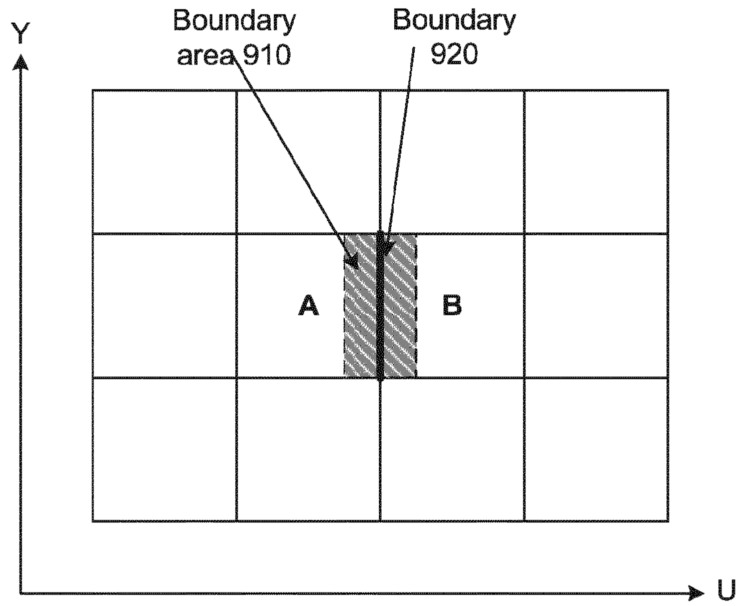
Y
Boundary
area 910
Boundary
920
A
B
U

FIG. 9

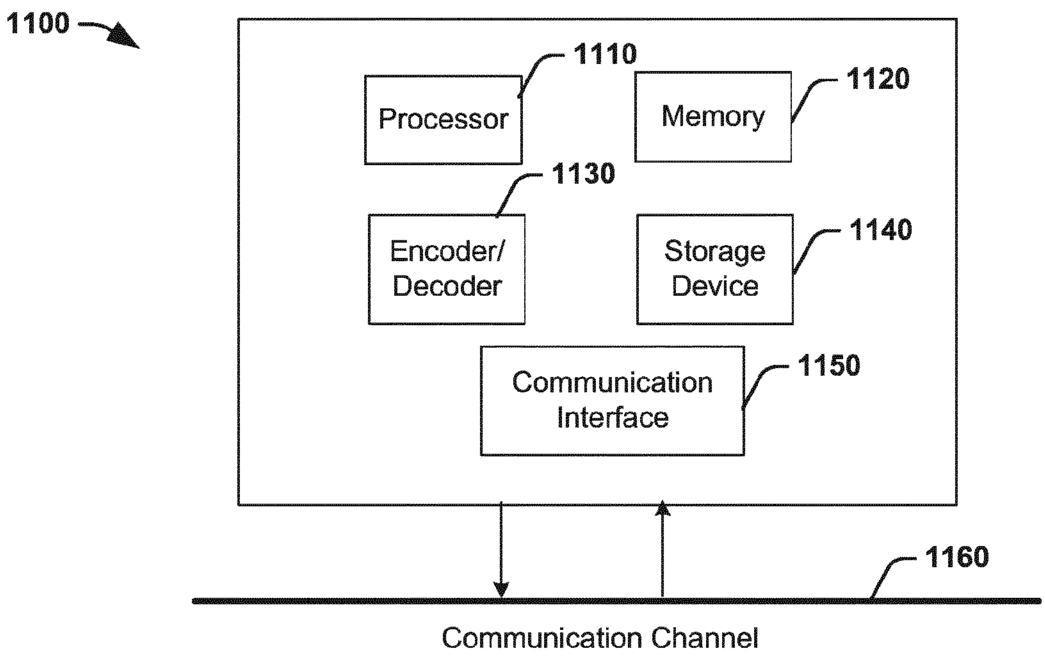
1100
1110
Processor
Memory
1120
1130
Encoder/
Decoder
Storage
Device
1140
Communication
Interface
1150
1160
Communication Channel

FIG. 11

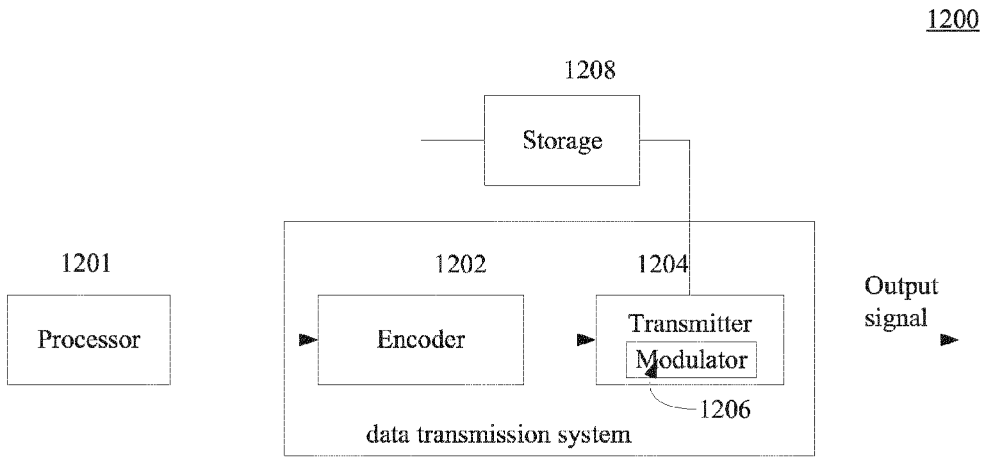
1200
1208
Storage
1201
Processor
1202
Encoder
1204
Transmitter
Modulator
1206
data transmission system
Output
signal

FIG. 12

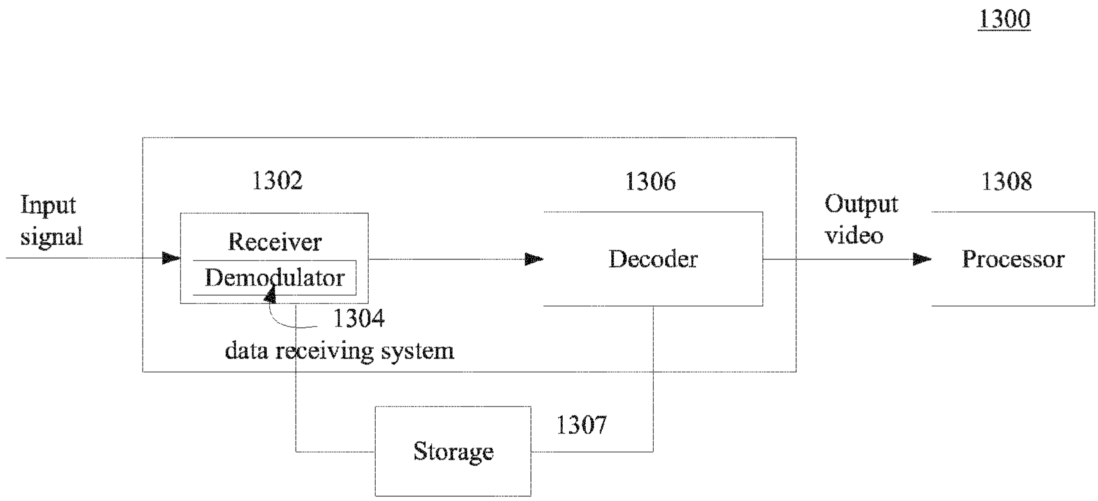
1300
Input
signal
1302
Receiver
Demodulator
1304
data receiving system
1306
Decoder
Output
video
1308
Processor
Storage
1307

FIG. 13

Europäisches Patentamt
European Patent Office
Office européen des brevets

# EUROPEAN SEARCH REPORT

Application Number
EP 15 30 5865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | WO 2015/055495 A1 (THOMSON LICENSING [FR]) 23 April 2015 (2015-04-23)<br>* pages 9-13; figure 4 *<br>----- | 1<br><br>2-7,9-14 | INV.<br>H04N19/186<br>H04N19/30<br>H04N19/103<br>H04N19/154 |
| Y | US 2014/341305 A1 (QU SHENG [US] ET AL) 20 November 2014 (2014-11-20)<br>* paragraph [0106] *<br>----- | 2-7,9-14 | |
| A | US 2009/010333 A1 (TOURAPIS ALEXANDROS [US] ET AL) 8 January 2009 (2009-01-08)<br>* paragraphs [0024], [0086], [0097] - [0112] *<br>----- | 1-15 | |
| A | WO 2013/112532 A2 (DOLBY LAB LICENSING CORP [US]) 1 August 2013 (2013-08-01)<br>* paragraphs [0009], [0034] *<br>----- | 1-15 | |
| A | BORDES P ET AL: "AHG14: Color Gamut Scalable Video Coding using 3D LUT: New Results",<br>14. JCT-VC MEETING; 25-7-2013 - 2-8-2013; VIENNA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-N0168-v3,<br>24 July 2013 (2013-07-24), XP030114646,<br>* the whole document *<br>----- | 1-15 | TECHNICAL FIELDS SEARCHED (IPC)<br>H04N |

The present search report has been drawn up for all claims

2

| Place of search | Date of completion of the search | Examiner |
|---|---|---|
| Munich | 9 November 2015 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 15 30 5865

This annex lists the patent family members relating to the patent documents cited in the above-mentioned European search report. The members are as contained in the European Patent Office EDP file on
The European Patent Office is in no way liable for these particulars which are merely given for the purpose of information.

09-11-2015

| Patent document cited in search report | Publication date | Patent family member(s) | Publication date |
|---|---|---|---|
| WO 2015055495 A1 | 23-04-2015 | TW 201517633 A | 01-05-2015 |
| | | WO 2015055495 A1 | 23-04-2015 |
| US 2014341305 A1 | 20-11-2014 | CN 104041036 A | 10-09-2014 |
| | | EP 2801192 A1 | 12-11-2014 |
| | | HK 1203013 A1 | 09-10-2015 |
| | | JP 2015503873 A | 02-02-2015 |
| | | KR 20140120320 A | 13-10-2014 |
| | | TW 201347542 A | 16-11-2013 |
| | | US 2014341305 A1 | 20-11-2014 |
| | | WO 2013103522 A1 | 11-07-2013 |
| US 2009010333 A1 | 08-01-2009 | CN 101375605 A | 25-02-2009 |
| | | EP 1982527 A2 | 22-10-2008 |
| | | JP 2009525637 A | 09-07-2009 |
| | | KR 20080090421 A | 08-10-2008 |
| | | US 2009010333 A1 | 08-01-2009 |
| | | WO 2007089696 A2 | 09-08-2007 |
| WO 2013112532 A2 | 01-08-2013 | EP 2807823 A2 | 03-12-2014 |
| | | EP 2945377 A1 | 18-11-2015 |
| | | WO 2013112532 A2 | 01-08-2013 |

EPO FORM P0459

For more details about this annex : see Official Journal of the European Patent Office, No. 12/82